# EUROPEAN PATENT APPLICATION

(11) **EP 2 306 713 A2**
(43) Date of publication of application: **06.04.2011**
(21) Application number: 10172518.2
(22) Date of filing: 11.08.2010
(51) Int. Cl.: H04N 5/76, H04N 5/77, H04N 5/232

(54) **System and method for effectively utilizing a recorder device**

(30) Priority: 01.09.2009 US 584141
(71) Applicant: Sony Corporation, Minato-ku Tokyo 108-0075 (JP); Sony Electronics Inc., Park Ridge, NJ 07656 (US)
(72) Inventor: Cowie, Robert, Escondido, CA 92026 (US)
(74) Representative: McGowan, Cathrine

(57) **Abstract**

A system and method for effectively utilizing a recorder device includes a timecode generator that generates timecode for synchronizing electronic information. A transceiver of the recorder device wirelessly transmits the timecode to a plurality of cameras. The cameras capture video data and audio data, and timecode managers of the respective cameras combine the received timecode with the captured video data and audio data to produce camera data. The cameras then wirelessly transmit the camera data to the recorder device for storage in a recorder memory. The recorder device may also receive and store audio data from a public address system (PA). Furthermore, a computer device may communicate with the recorder device to perform various types of editing procedures on the stored camera data and PA data to produce edited data.

## Description

### BACKGROUND SECTION

### 1. Field of the Invention

This invention relates generally to techniques for handling electronic information, and relates more particularly to a system and method for effectively utilizing a recorder device.

### 2. Description of the Background Art

Implementing effective methods for handling electronic information is a significant consideration for designers and manufacturers of contemporary electronic entertainment systems. However, effectively handling electronic information may create substantial challenges for system designers. For example, enhanced demands for increased system functionality and performance may require more system processing power and require additional hardware resources. An increase in processing or hardware requirements may also result in a corresponding detrimental economic impact due to increased production costs and operational inefficiencies.

Furthermore, enhanced system capability to perform various advanced operations may provide additional benefits to a system user, but may also place increased demands on the control and management of various system components. For example, an enhanced electronic system that effectively captures and manages video information may benefit from an efficient implementation because of the large amount and complexity of the digital data involved.

Due to growing demands on system resources and substantially increasing data magnitudes, it is apparent that developing new techniques for handling electronic information is a matter of concern for related electronic technologies. Therefore, for all the foregoing reasons, developing effective systems for handling electronic information remains a significant consideration for designers, manufacturers, and users of contemporary electronic devices.

### SUMMARY

In accordance with the present invention, a system and method are disclosed for effectively implementing a recording system. In accordance with one embodiment of the present invention, a recorder of the recording system initially utilizes a timecode generator to begin generating a timecode signal in any effective manner. The recorder then utilizes a security manager to establish secure wireless connections to a plurality of different cameras in the recording system according to any effective techniques or protocols.

The recorder next utilizes a transceiver to wirelessly transmit the generated timecode signal to the different respective cameras. The various cameras then proceed to capture appropriate video data and corresponding audio data. The cameras also utilize respective timecode managers to insert the received timecode into the captured camera data (video data and audio data). The cameras then utilize respective transceivers to transmit the camera data to the recorder which receives the camera data from the various cameras, and then locally stores the received camera data in the recorder memory.

In accordance with certain embodiments of the present invention, a connection may also be concurrently provided between the recorder and a public address system (PA) in any effective manner. A recorder application from the recorder accesses the timecode that is being generated by the timecode generator. The recorder receives a PA audio signal from the PA, and the recorder application combines the PA audio signal with the timecode signal to produce PA data. The recorder application then locally stores the PA data in the recorder memory.

In accordance with certain embodiments, a connection may be provided between the recorder and a computer in any effective manner. The computer may then initiate bi-directional communications with the recorder according to any appropriate protocols or techniques. An editing program of the computer may gain access to the camera data and the PA data that is stored in the recorder memory. The editing program of the computer may remotely control an editing procedure performed upon the camera data and the PA data while it remains stored in the recorder memory to thereby produce edited data. Finally, the recorder application stores the edited data locally in the recorder memory. The present invention thus provides an improved system and methodology for effectively implementing a recording system.

### BRIEF DESCRIPTION OF THE DRAWINGS

Embodiments of the invention will now be described with reference to the accompanying drawings, throughout which like parts are referred to by like references, and in which:
FIG. 1 is a block diagram of a recording system, in accordance with one embodiment of the present invention;
FIG. 2 is a block diagram for one embodiment of the recorder of FIG. 1, in accordance with the present invention;
FIG. 3 is a block diagram for one embodiment of the recorder memory of FIG. 2, in accordance with the present invention;
FIG. 4 is a block diagram for one embodiment of the camera data of FIG. 3, in accordance with the present invention;
FIG. 5 is a block diagram for one embodiment of a camera from FIG. 1, in accordance with the present invention;
FIG. 6 is a block diagram for one embodiment of the captures subsystem from FIG. 5, in accordance with the present invention;
FIG. 7 is a block diagram for one embodiment of the control module from FIG. 5, in accordance with the present invention;
FIG. 8 is a block diagram for one embodiment of the camera memory from FIG. 7, in accordance with the present invention; and
FIGS. 9A-C provide a flowchart of method steps for effectively utilizing a recording system, in accordance with one embodiment of the present invention.

### DETAILED DESCRIPTION

The present invention relates to an improvement in recording systems. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Thus, the present invention is not intended to be limited to the embodiments shown, but is to be accorded the widest scope consistent with the principles and features described herein.

The present invention is described herein as a system and method for effectively utilizing a recorder device, and includes a timecode generator that generates timecode for synchronizing electronic information. A transceiver of the recorder device wirelessly transmits the timecode to a plurality of cameras. The cameras capture video data and audio data, and timecode managers of the respective cameras combine the received timecode with the captured video data and audio data to produce camera data. The cameras then wirelessly transmit the camera data to the recorder device for storage in a recorder memory. The recorder device may also receive and store PA audio data from a public address system. Furthermore, a computer device may communicate with the recorder device to perform various types of editing procedures on the stored camera data and PA data to produce edited data.

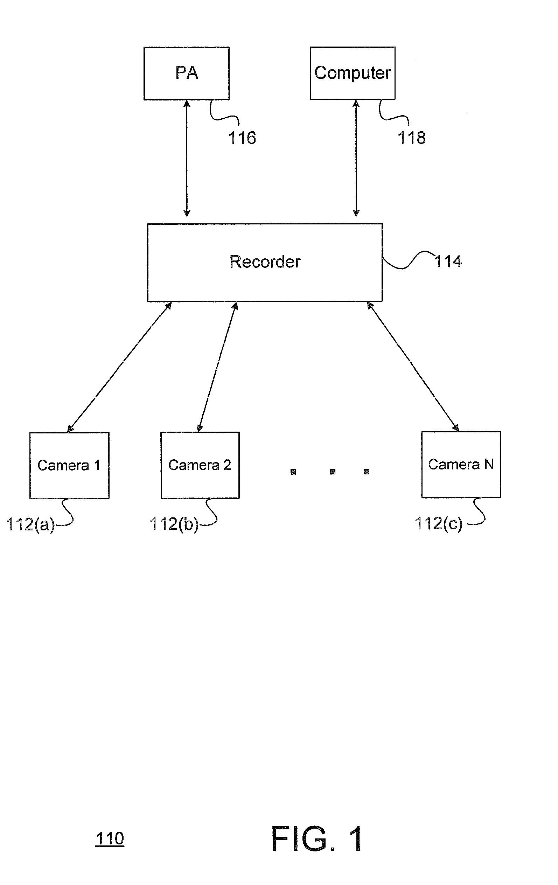

Referring now to FIG. 1, a block diagram of a recording system 110 is shown, in accordance with one embodiments of the present invention. In the FIG. 1 embodiment, recording system 110 may include, but is not limited to, a plurality of cameras 112, a recorder 114, a public address system (PA) 116, and a computer 118. In alternate embodiments, recording system 110 may be implemented by utilizing components and configurations in addition to, or instead of, certain of those components and configurations discussed in conjunction with the FIG. 1 embodiment.

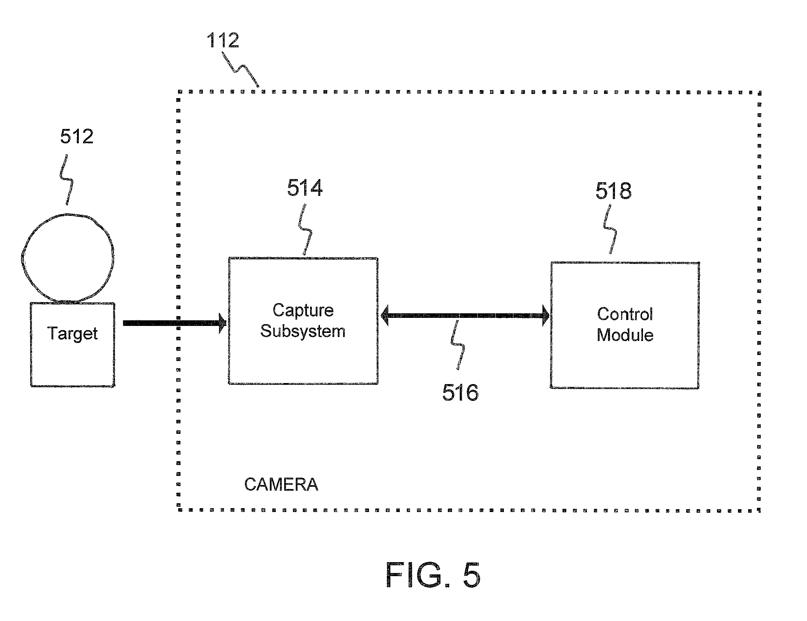

In accordance with the present invention, any desired number of cameras 112 may be supported in recording system 110. In the FIG. 1 embodiment, cameras 112 may include a camera 1 (112(a)) through a camera N 112(c). In the FIG. 1 embodiment, each of the cameras 112 bi-directionally communicates with recorder 114 by utilizing any appropriate and secure wireless communication techniques or other effective communication methods. One implementation for the cameras 112 is further discussed below in conjunction with FIGS. 5-8.

In the FIG. 1 embodiment, recorder 114 may be implemented in any effective manner to concurrently record camera data transmitted from the various cameras 112. In the FIG. 1 embodiment, recorder 114 also wirelessly provides a global synchronization signal (such as known or enhanced timecode) to the cameras 112 for combining with the captured video data and audio data. This embedded timecode significantly facilitates any subsequent editing procedures by allowing the camera data from the various cameras to be easily synchronized.

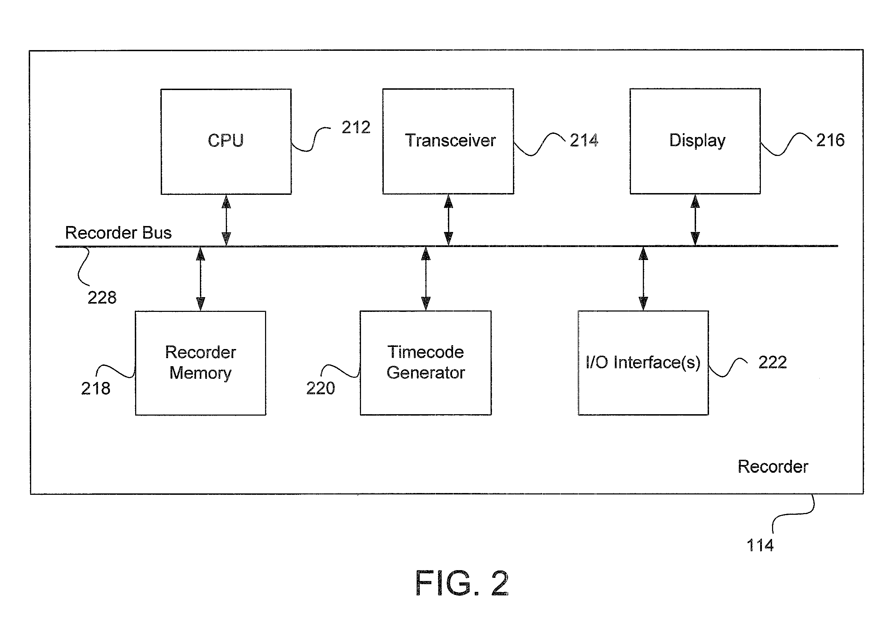

In the FIG. 1 embodiment, recorder 114 typically provides appropriate interface means for connecting a plurality of hard disk drives to support a disk swap procedure that enables greatly extended recording times. For example, when a given hard disk become full, recorder 114 may advantageously switch the recording process to another non-full hard disk. The full hard disk may then be replaced by another empty hard disk. Providing the cameras 112 with wireless access to the hard disks on recorder 114 alleviates the need to locally store the camera data on non-volatile memory in the respective cameras 112. Additional details for one embodiment of recorder 114 are further discussed below in conjunction with FIGS. 2-4.

In the FIG. 1 embodiment, recorder 114 may be coupled to PA 116 in any effective manner. PA 116 typically includes, but is not limited to, one or more microphones or other audio sources, and an audio mixer device that combines the audio signals into a composite PA audio signal. In certain embodiments, PA 116 may typically be utilized at a particular live event that is concurrently being photographed with cameras 112. In accordance with the present invention, recorder 114 receives the composite PA audio signal from PA 116. Recorder 114 combines the received PA audio signal with the same timecode signal that is being wirelessly transmitted to cameras 112 to thereby produce PA data that can then readily be synchronized with camera data from cameras 112.

In the FIG. 1 embodiment, recorder 114 may be coupled to computer 118 in any effective manner. For example, recorder 114 may be efficiently coupled to computer 118 through a single cable connection that supports bi-directional communication by using any effective protocols or techniques. Computer 118 may be implemented in any appropriate manner to control and otherwise interact with recorder 114. For example, computer 118 may include appropriate editing software that allows computer 118 to efficiently perform various appropriate non-linear editing procedures on the camera data and the PA data stored in recorder 114 without transferring the camera data or the PA data to computer 118. The implementation and utilization of the FIG. 1 recording system 110 is further discussed below in conjunction with FIGS. 2-9.

Referring now to FIG. 2, a block diagram for one embodiment of the FIG. 1 recorder 114 is shown, in accordance with the present invention. In the FIG. 2 embodiment, recorder 114 may include, but is not limited to, a central processing unit (CPU) 212, a transceiver 214, a display 216, a recorder memory 218, a timecode generator 220, and input/output interfaces (I/O interfaces) 222. Selected ones of the foregoing components of recorder 114 may be coupled to, and communicate through, a recorder bus 228. In alternate embodiments, recorder 114 may be implemented using components and configurations in addition to, or instead of, certain of those components and configurations discussed in conjunction with the FIG. 2 embodiment.

In the FIG. 2 embodiment, CPU 212 may be implemented to include any appropriate and compatible microprocessor device that executes software instructions to thereby control and manage the operation of recorder 114. In the FIG. 2 embodiment, transceiver 214 may include any effective means to support bi-directional wireless communications between recorder 114 and cameras 112 or other electronic devices. For example, transceiver 214 may provide multiple transmission and reception channels to concurrently communicate with a plurality of external wireless devices.

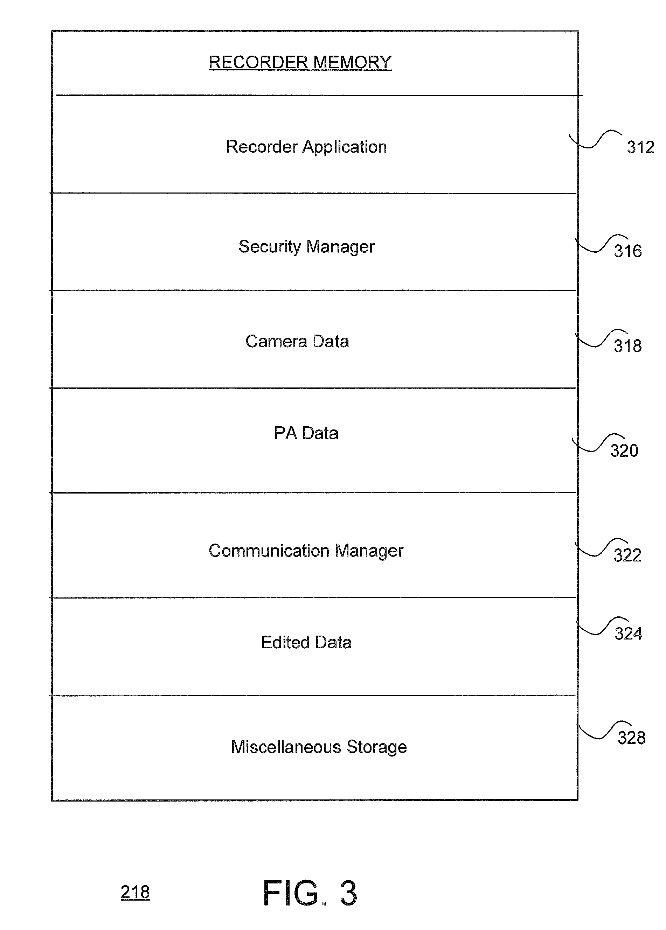

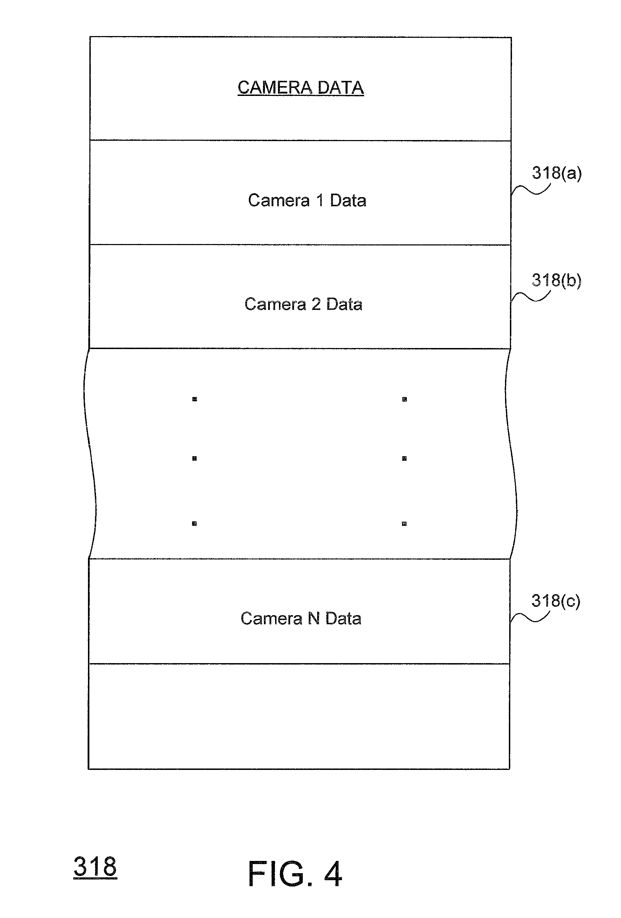

In the FIG. 2 embodiment, display 216 may include any effective means for presenting visual information to a system user. For example, display 216 may include various status indicators that provide information regarding the operation of recorder 114 or other appropriate entities. In the FIG. 2 embodiment, recorder memory 218 may be implemented to include any combination of desired storage devices, including, but not limited to, read-only memory (ROM), random-access memory (RAM), and various types of non-volatile memory, such as floppy disks, flash memory, or hard disks. The contents and functionality of memory 218 are further discussed below in conjunction with FIGS. 3 and 4.

In the FIG. 2 embodiment, timecode generator 220 may be implemented to generate one or more synchronization signals according to any known or enhanced protocols or formats. For example, timecode generator 220 may produce timecode in esther digital or analog formats to indicate a chronological sequence of time indications of any appropriate increments.

In the FIG. 2 embodiment, I/O interfaces 222 may include one or more input and/or output interfaces to receive and/or transmit any required types of information for recorder 114. For example, in the FIG. 2 embodiment, recorder 114 may utilize I/O interfaces 222 to bi-directionally communicate with other external devices in recording system 110 (FIG. 1). Furthermore, a system user may utilize I/O interfaces 222 to communicate with recorder 114 by utilizing any appropriate and effective techniques. For example, a system user may utilize a remote control device or a keyboard to communicate with recorder 114 through I/O interfaces 222. Additional details regarding the implementation of recorder 114 are discussed below in conjunction with FIGS. 3-4.

Referring now to FIG. 3, a block diagram for one embodiment of the FIG. 2 recorder memory 218 is shown, in accordance with the present invention. In the FIG. 3 embodiment, memory 218 includes, but is not limited to, a recorder application 312, a security manager 316, camera data 318, PA data 320, a communication manager 322, edited data 324, and miscellaneous storage 328. In alternate embodiments, recorder memory 218 may include components in addition to, or instead of, certain of those components discussed in conjunction with the FIG. 3 embodiment.

In the FIG. 3 embodiment, recorder application 312 may include program instructions that are preferably executed by CPU 212 (FIG. 2) to perform various functions and operations for recorder 114. The particular nature and functionality of recorder application 312 may vary depending upon factors such as the specific type and particular functionality of the corresponding recorder 114.

In the FIG. 3 embodiment, recorder 114 utilizes security manager 316 to create secure lines of wireless communication between recorder 114 and cameras 112 in any effective manner. For example, cameras 112 may transmit unique security identifiers with the transmitted camera data, and security manager 316 may then only accept and store wireless transmission for which an appropriate security identifier is detected.

In the FIG. 3 embodiment, camera data 318 may include any appropriate information or data transmitted by cameras 112 to recorder 114. For example, camera data 318 may typically include video information, audio information, and timecode information. Additional details regarding camera data 318 are further discussed below in conjunction with FIG. 4. In the FIG. 3 embodiment, PA data 320 may include any appropriate information or data accessed by recorder 114 from PA 116 (FIG. 1). For example, PA data 320 may typically include audio information and timecode information.

In the FIG. 3 embodiment, recorder 114 may utilize communication manager 322 to bi-directionally communicate with various external devices. For example, in certain embodiments, communication manager 322 may communicate with one or more cameras 112 to support a remote recorder control procedure during which camera users can remotely control various appropriate functions of recorder 114. During the remote recorder control procedure, communication manager 322 may provide various status indication signals to a controlling camera 112. The controlling camera 112 may display corresponding information in a viewfinder. A camera user may then cause the controlling camera 112 to transmit any desired control signals to thus remotely manage the operation of recorder 114.

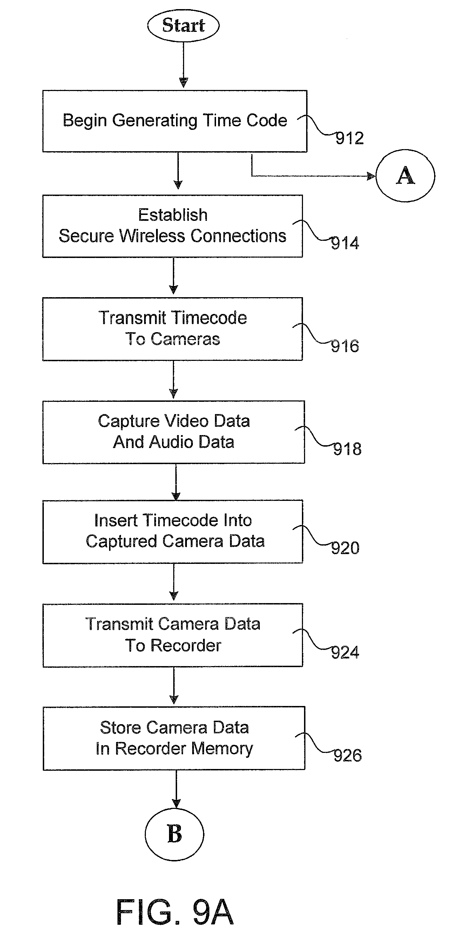

In the FIG. 3 embodiment, a computer 118 or other appropriate electronic device may access camera data 318 and PA data 320 for performing an editing procedure directly on recorder 114 to produce edited data 324, as discussed above in conjunction with FIG. 1. Miscellaneous storage 328 may include any additional desired information, software, or data. In the FIG. 3 embodiment, the present invention is disclosed and discussed as being implemented primarily as software. However, in alternate embodiments, some or all of the functions of the present invention may be performed by appropriate electronic hardware circuits that are configured for performing various functions that are equivalent to those functions of the software modules discussed herein. The utilization of recorder memory 218 is further discussed below in conjunction with FIGS. 9A-C.

Referring now to FIG. 4, a block diagram of the FIG. 3 camera data 318 is shown, in accordance with one embodiment of the present invention. In alternate embodiments, camera data 318 may be implemented using components and configurations in addition to, or instead of, certain of those components and configurations discussed in conjunction with the FIG. 4 embodiment.

In the FIG. 4 embodiment, camera data 318 includes discrete sets of individual camera data 318 from respective cameras 112 (FIG. 1). For example, in the FIG. 4 embodiment, camera data 318 includes camera 1 data 318(a) from camera 112(a) through camera N data 318(c) from camera N 112(c). Any desired number of cameras 112 are contemplated for use in recording system 110. In the FIG. 4 embodiment, each set of camera data 318 may include any appropriate information or data transmitted by a corresponding camera 112 to recorder 114. For example, each set of camera data 318 may typically include video information, audio information, and timecode information, as discussed above in conjunction with FIG. 3.

Referring now to FIG. 5, a block diagram for one embodiment of a camera 112 is shown, in accordance with the present invention.

In the FIG. 5 embodiment, camera 112 is implemented as a video camera that may include, but is not limited to, a capture subsystem 514, a system bus 516, and a control module 518. in the FIG. 5 embodiment, capture subsystem 514 may be optically coupled to a photographic target 512 and may also be electrically coupled via system bus 516 to control module 518.

In alternate embodiments, camera 112 may include components in addition to, or instead of, certain of those components discussed in conjunction with the FIG. 5 embodiment. In addition, in certain embodiments, the present invention may alternately be practiced with any appropriate type of electronic device other than the camera 112 of FIG. 5. For example, camera 112 may alternately be implemented as an imaging device, a cellular telephone, a computer device, or a consumer electronics device.

In the FIG. 5 embodiment, once a system user has focused capture subsystem 514 on target 512 and requested camera 112 to capture image data corresponding to target 512, then control module 518 may instruct capture subsystem 514 via system bus 516 to capture image data representing target 512. The captured image data may then be transferred over system bus 516 to control module 518, which may responsively perform various processes and functions with the image data. System bus 516 may also bi-directionally pass various status and control signals between capture subsystem 514 and control module 518.

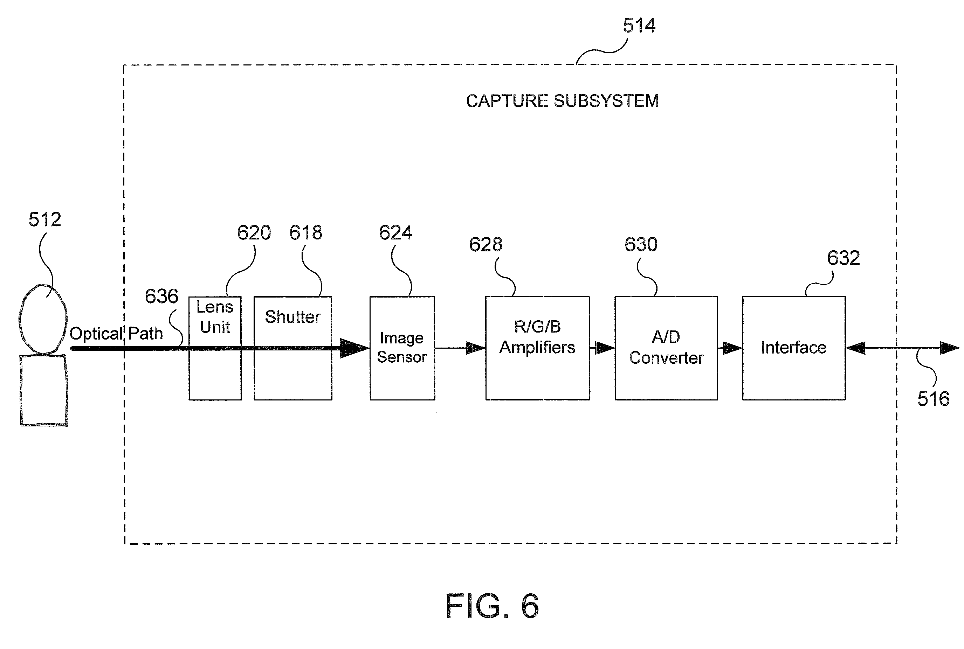

Referring now to FIG. 6, a block diagram for one embodiment of the FIG. 5 capture subsystem 514 is shown, in accordance with the present invention. In the FIG. 6 embodiment, capture subsystem 514 comprises, but is not limited to, a shutter 618, a lens unit 620, an image sensor 624, red, green, and blue (R/G/B) amplifiers 628, an analog-to-digital (A/D) converter 630, and an interface 632. In alternate embodiments, capture subsystem 514 may include components in addition to, or instead of, certain those components discussed in conjunction with the FIG. 6 embodiment.

In the FIG. 6 embodiment, capture subsystem 514 captures image data corresponding to target 512 via reflected light impacting image sensor 624 along optical path 636. Image sensor 624, which may include a charged-coupled device (CCD), may responsively generate a set of image data representing the target 512. The image data may then be routed through red, green, and blue amplifiers 628, A/D converter 630, and interface 632. From interface 632, the image data passes over system bus 516 to control module 518 for appropriate processing and storage. Other types of image capture sensors, such as CMOS or linear arrays are also contemplated for capturing image data in conjunction with the present invention.

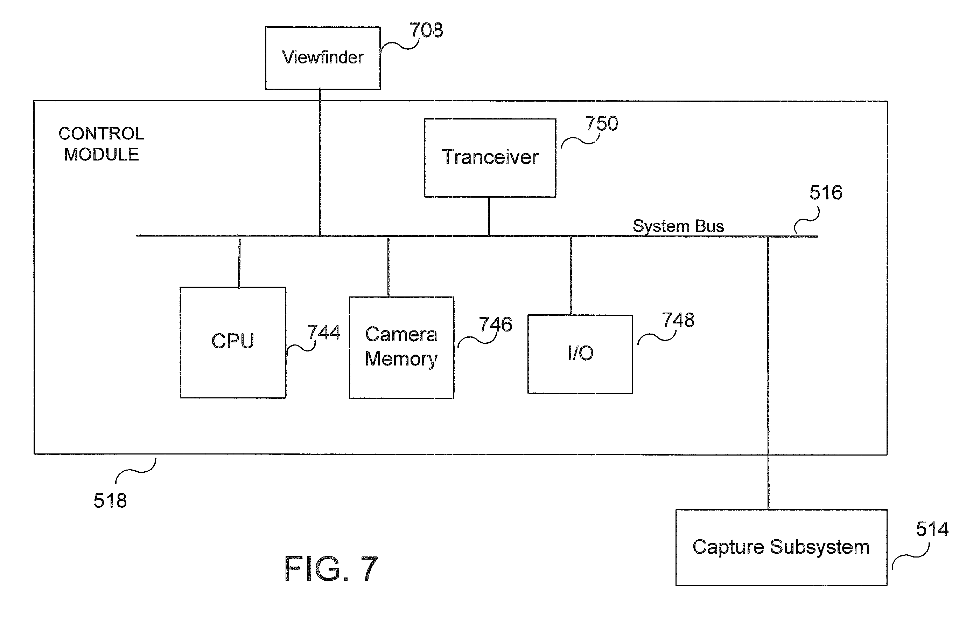

Referring now to FIG. 7, a block diagram for one embodiment of the FIG. 5 control module 518 is shown, in accordance with the present invention. In the FIG. 7 embodiment, control module 518 includes, but is not limited to, a viewfinder 708, a central processing unit (CPU) 744, a memory 746, one or more input/output interface(s) (I/O) 748, and a transceiver 750. Viewfinder 708, CPU 744, memory 746, I/O 748, and transceiver 750 are each coupled to, and communicate, via common system bus 516 that also communicates with capture subsystem 514. In alternate embodiments, control module 518 may include components in addition to, or instead of, certain of those components discussed in conjunction with the FIG. 7 embodiment.

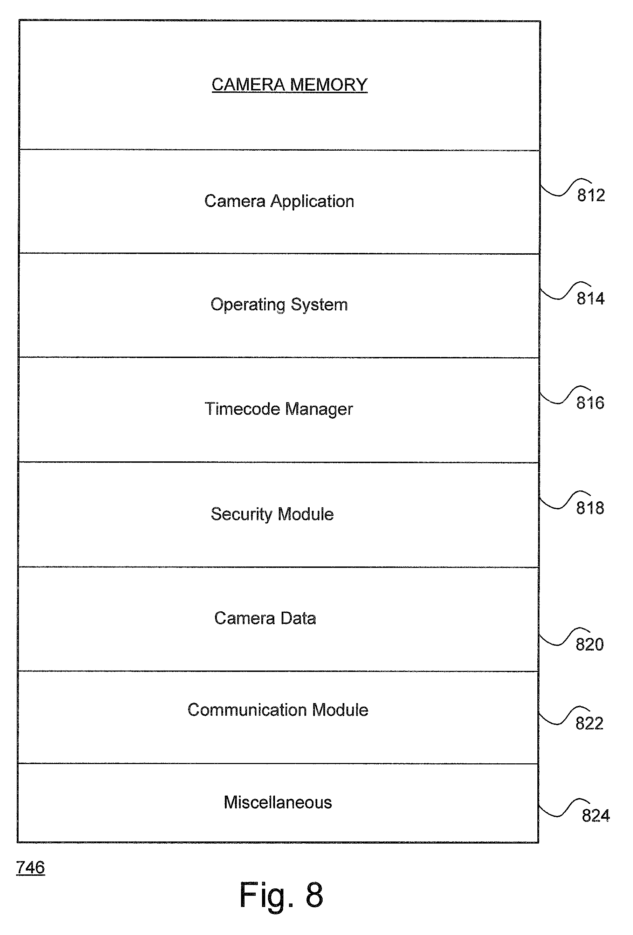

In the FIG. 7 embodiment, CPU 744 may be implemented to include any appropriate microprocessor device. Alternately, CPU 744 may be implemented using any other appropriate technology. For example, CPU 744 may be implemented to include certain application-specific integrated circuits (ASICs) or other appropriate electronic devices. Camera memory 746 may be implemented as one or more appropriate storage devices, including, but not limited to, read-only memory, random-access memory, and various types of non-volatile memory, such as floppy disc devices, hard disc devices, or flash memory. I/O 748 may provide one or more effective interfaces for facilitating bi-directional communications between camera 112 and any external entity, including a system user or another electronic device. I/O 748 may be implemented using any appropriate input and/or output devices. The operation and utilization of control module 518 are further discussed below in conjunction with FIG. 8.

Referring now to FIG. 8, a block diagram for one embodiment of the FIG. 7 camera memory 746 is shown, in accordance with the present invention. In the FIG. 8 embodiment, memory 746 may include, but is not limited to, a camera application 812, an operating system 814, a timecode manager 816, a security module 818, camera data 820, a communication module 822, and miscellaneous 824. In alternate embodiments, memory 746 may include components in addition to, or instead of, certain of those components discussed in conjunction with the FIG. 8 embodiment.

In the FIG. 8 embodiment, camera application 812 may include program instructions that are executed by CPU 744 (FIG. 7) to perform various functions and operations for camera 112. The particular nature and functionality of camera application 812 varies depending upon factors such as the type and particular use of the corresponding camera device 112. In the FIG. 8 embodiment, operating system 814 controls and coordinates low-level functionality of camera device 112.

In the FIG. 8 embodiment, camera 112 may utilize timecode manager 816 for receiving a global synchronization signal (such as known or enhanced timecode) from recorder 114, as discussed above in conjunction with FIG. 1. Timecode manager 816 may then advantageously combine the received timecode with video data and audio data captured by camera 112 to thereby produce final camera data 820 for transmission to recorder 114. This embedded timecode significantly facilitates any subsequent editing procedures by allowing the camera data from the various cameras to be easily synchronized.

In the FIG. 8 embodiment, camera 112 utilizes security module 818 to help create secure lines of wireless communication between recorder 114 and camera 112 in any effective manner. For example, security module 818 may transmit a security identifier with the transmitted camera data 820 for detection by recorder 114, as discuss above in conjunction with FIG. 3.

In the FIG. 8 embodiment, camera 112 may utilize communication module 822 to bi-directionally communicate with recorder 114 for any appropriate purposes. For example, in certain embodiments, communication module 822 may communicate with recorder 114 to support a remote recorder control procedure during which a camera user can remotely control various appropriate functions of recorder 114. During the remote recorder control procedure, communication module 822 may receive various status indication signals from recorder 114. Camera 112 may display corresponding information in a viewfinder 708. The camera user may then cause camera 112 to transmit any desired control signals to thus remotely manage the operation of recorder 114. Miscellaneous storage 824 may include any additional desired information, software, or data. Additional detail regarding the utilization of camera memory 746 are further discussed below in conjunction with FIGS. 9A-C.

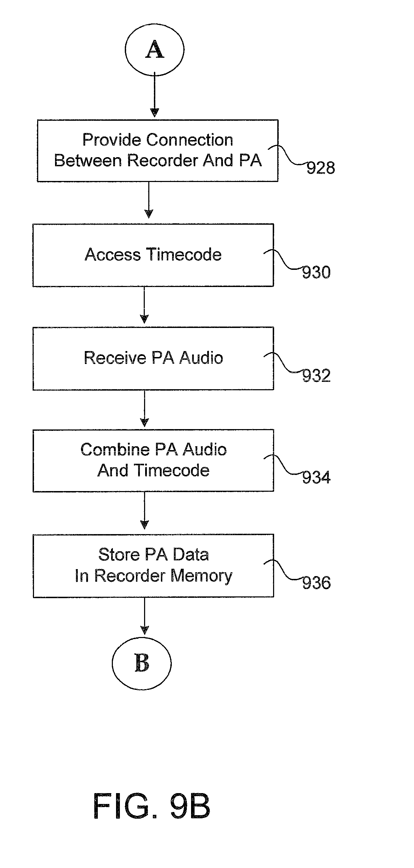

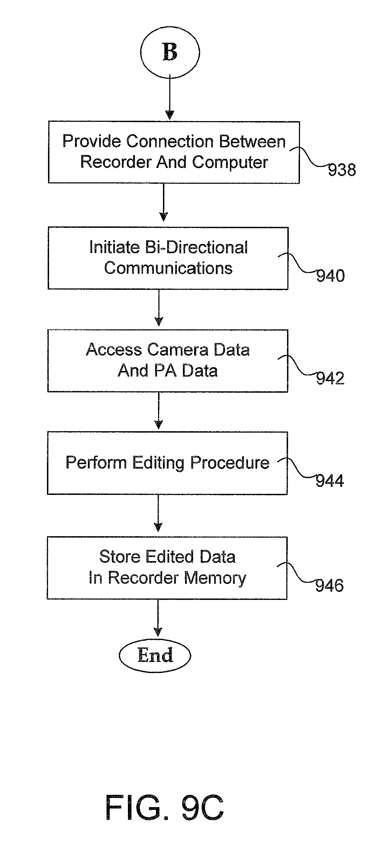

Referring now to FIGS. 9A-C, a flowchart of method steps for effectively utilizing a recording system 110 is shown, in accordance with one embodiment of the present invention. The FIG. 9 example is presented for purposes of illustration, and in alternate embodiments, the present invention may utilize various steps and sequences other than those discussed in conjunction with the FIG. 9 embodiment.

In the FIG. 9A embodiment, in step 912, a recorder 114 in a recording system 110 (FIG. 1) initially utilizes a timecode generator 220 to begin generating a timecode signal in any effective manner. After step 912, the FIG. 9A flowchart branches off to step 928 of FIG. 9B through connecting letter "A." In addition, in step 914 of FIG. 9A, the recorder 114 utilizes a security manager 316 to establish secure wireless connections to a plurality of different cameras 112 according to any effective techniques or protocols.

In step 916, the recorder 114 utilizes a transceiver 214 to wirelessly transmit the generated timecode signal to the different respective cameras 112. In step 918, the various cameras 112 capture appropriate video data and corresponding audio data. In step 920, the cameras 112 utilize respective timecode managers 816 to insert the received timecode into the captured camera data 820 (video data and audio data).

In step 924, the cameras 112 then utilize respective transceivers 750 to transmit the camera data 820 to the recorder 114. In step 926, the recorder 114 receives the camera data 820 from the various cameras 112, and then locally stores the received camera data in the recorder memory 218. The FIG. 9A process then advances to step 938 of the FIG. 9C flowchart through connecting letter "B."

In accordance with certain embodiments of the present invention, the process described below in conjunction with the FIG. 9B flowchart may typically occur concurrently with the process described above in conjunction with the FIG. 9A flowchart. In step 928 of the FIG. 9B embodiment, a connection is provided between the recorder 114 and a public address system (PA) 116 in any effective manner. In step 932, a recorder application 312 accesses the timecode that is being generated by the timecode generator 220 of the recorder 114.

In step 932, the recorder 114 receives a PA audio signal from the PA 116. In step 934, the recorder application 312 combines the PA audio signal with the timecode signal to produce PA data 320. In step 936, the recorder application 312 locally stores the PA data 320 in the recorder memory 218. The FIG. 9B process then advances to step 938 of the FIG. 9C flowchart through connecting letter "B."

In step 938 of the FIG. 9C embodiment, a connection is provided between the recorder 114 and a computer 118 in any effective manner. In step 940, the computer 118 initiates bi-directional communications with the recorder 114 according to any appropriate protocols or techniques. In step 942, an editing program of the computer 118 gains access to the camera data 318 and the PA data 320 that is stored in the recorder memory 218.

In step 944, the editing program of the computer 118 remotely controls an editing procedure performed upon the camera data 318 and the PA data 320 while it remains stored in the recorder memory 218 to thereby produce edited data 324. Finally, in step 946, the recorder application 312 stores the edited data 324 locally in recorder memory 218. The present invention thus provides an improved system and methodology for effectively utilizing a recorder device.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The invention has been explained above with reference to certain embodiments. Other embodiments will be apparent to those skilled in the art in light of this disclosure. For example, the present invention may readily be implemented using configurations and techniques other than those described in the embodiments above. Additionally, the present invention may effectively be used in conjunction with systems other than those described above. Therefore, these and other variations upon the discussed embodiments are intended to be covered by the present invention, which is limited only by the appended claims.

Various respective aspects and features of the invention are defined in the appended claims. Combinations of features from the dependent claims may be combined with features of the independent claims as appropriate and not merely as explicitly set out in the claims.

Further particular and preferred aspects of the invention are set out in the accompanying clauses. Features of the clauses may be combined with those of the independent claims as appropriate and in combinations other than those explicitly set out in the clauses and claims.
1. The apparatus of claim 1 wherein a security manager of said recorder establishes secure wireless communication links between said recorder and said cameras.
2. The apparatus of claim 1 wherein said recorder memory is implemented to include a plurality of hard disk drives for storing said camera data.
3. The apparatus of claim 1 wherein said recorder is coupled to a public address system that provides a PA audio signal to said recorder.
4. The apparatus of claim 1 wherein said recorder is coupled to a computer to support bi-directional communication procedures.
5. The apparatus of claim 1 wherein said recorder and a controller camera from said plurality of cameras support a remote recorder control procedure during which a camera user utilizes said controller camera to control operations of said recorder.

## Claims

1. An apparatus for supporting a recording procedure, comprising:
a timecode generator that generates timecode for synchronizing electronic information; and
a transceiver that wirelessly transmits said timecode to a plurality of cameras for combining with video data and audio data to produce camera data, said cameras wirelessly transmitting said camera data to a recorder for storing in a recorder memory.

2. The apparatus of claim 1 wherein said recorder simultaneously stores separate sets of said camera data, each of said separate sets being transmitted from a different respective one of said plurality of cameras.

3. The apparatus of claim 2 wherein said separate sets of said camera data are able to be synchronized because identical instances of said timecode have been embedded in said separate sets of said camera data.

4. The apparatus of claim 3 wherein previously embedding said timecode in said camera data facilitates an audio-video editing procedure.

5. The apparatus of claim 1 wherein a security manager of said recorder establishes secure wireless communication links between said recorder and said cameras, and said security manager authorizes receiving and locally storing only said camera data that includes a unique identifier that is provided by said cameras.

6. The apparatus of claim 1 wherein said recorder memory is implemented to include a plurality of hard disk drives for storing said camera data, and said recorder memory supports a disk-drive swapping procedure to enable extended recording times for capturing said camera data.

7. The apparatus of claim 1 wherein said recorder is coupled to a public address system that provides a PA audio signal to said recorder, and said recorder combines said timecode with said PA audio signal to produce PA data that is stored in said recorder memory.

8. The apparatus of claim 1 wherein said recorder is coupled to a computer to support bi-directional communication procedures, and said recorder is coupled to said computer through a single interface cable.

9. The apparatus of claim 1 wherein said recorder is coupled to a computer to support bi-directional communication procedures, and said computer includes an editing application for performing an editing procedure.

10. The apparatus of claim 9 wherein said editing application references said timecode to perform said editing procedure on said camera data and on PA data from a public address system.

11. The apparatus of claim 10 wherein said editing procedure occurs on said recorder without transferring said camera data and said PA data to said computer.

12. The apparatus of claim 1 wherein said recorder and a controller camera from said plurality of cameras support a remote recorder control procedure during which a camera user utilizes said controller camera to control operations of said recorder, and a communication manager of said recorder wirelessly sends recorder status signals to said controller camera for display to said camera user in a viewfinder device.

13. The apparatus of claim 12 wherein said camera user utilizes a communication module of said controller camera to wirelessly transmit recorder control signals to said recorder.

14. The apparatus of claim 10 wherein said recorder concurrently records said camera data from said plurality of cameras and PA data from a public address system, said camera data and said PA data being synchronized for an editing procedure by embedding synchronized versions of said timecode.

15. A method for supporting a recording procedure, comprising:
providing a timecode generator that generates timecode for synchronizing electronic information;
transmitting said timecode wirelessly to a plurality of cameras for combining with video data and audio data to produce camera data; and
transmitting said camera data wirelessly from said cameras to a recorder for storing in a recorder memory.
